# EUROPÄISCHE PATENTANMELDUNG

(11) **EP 1 112 813 A2**
(43) Veröffentlichungstag der Anmeldung: **04.07.2001**
(21) Anmeldenummer: 00127053.7
(22) Anmeldetag: 11.12.2000
(51) Int. Cl.: B24B 45/00, B24B 41/04

(54) **Bohreinrichtung für spröde Werkstoffe**

(30) Priorität: 29.12.1999 DE 19963636
(71) Anmelder: Heraeus Quarzglas GmbH & Co. KG, 63450 Hanau (DE)
(72) Erfinder: Christiansen, Uwe, 63571 Geinhausen (DE); Bierstedt, Henning, 06749 Friedersdorf (DE)

(57) **Zusammenfassung**

Die Erfindung betrifft eine Bohreinrichtung (1) zur Bearbeitung spröder Werkstoffe. Hierbei ist ein Bohrkopf (2) mit einer Bohrstange (3) zur Übertragung des Bohrmomentes lösbar mittels einer formschlüssigen Verbindung verbunden. Zur exakten relativen Ausrichtung hat der Bohrkopf (2) eine kegelförmige Ausformung (10), die im dargestellten Betriebszustand zentrisch in eine entsprechende Aufnahme (11) der Bohrstange (3) eingreift. Zum Schutz gegen axiales Lösen dient eine als Hohlmutter ausgeführtes Fixierung oder Arretierung (15; 20), welches in jeweils ein Gewinde (16) des Bohrkopfes (2) und in ein Gewinde (17) der Bohrstange (3) eingreift, wobei die Gewinde (16, 17) zueinander gegenläufige Steigungen aufweisen. Durch eine Drehbewegung der Arretierung (15) können der Bohrkopf (2) und die Bohrstange (3) daher in einfacher Weise gegeneinander verspannt oder zum Austausch auseinander gezogen werden, wobei zugleich die von der Arretierung (15) eingeschlossene Verbindung vor äußeren Einflüssen optimal geschützt ist. Die Bohreinrichtung (1) ermöglicht daher Bohrungen mit hoher Genauigkeit, ohne daß hiermit zugleich ein erhöhter Verschleiß oder eine umständliche Handhabung verbunden ist.

## Beschreibung

Die Erfindung betrifft eine Bohreinrichtung für spröde Werkstoffe, insbesondere für Quarzglas, mit einem an einer Bohrstange mittels einer formschlüssigen Verbindung lösbar fixierten Bohrkopf.

Solche Bohreinrichtungen werden in der Praxis beispielsweise zum Bohren von Glaswerkstof-fen eingesetzt. Die hierbei auftretenden Rahmenbedingungen unterscheiden sich von denjenigen zur Bearbeitung metallischer Werkstoffe derart grundlegend, daß der Einsatz identischer Bohreinrichtugnen weitgehend ausscheidet. Dabei ist zunächst eine Anpassung des Bohrkopfes zur Vermeidung unerwünschter Schädigungen des spröden Werkstoffes erforderlich, wobei der Bohrkopf üblicherweise mehrere stufenweise in ihrem Durchmesser unterschiedlich bemes-sene Bohrkronen aufweist. Auch die Verbindung zwischen dem Bohrkopf und der Bohrstange ist an die besonderen Umstände bei der Bearbeitung spröder Werkstoffe anzupassen. Dabei stehen sich zwei grundsätzliche Zielsetzungen gegenüber, wobei einerseits eine exakte Führung des Bohrkopfes und damit eine toleranzarme Bearbeitung der Werkstoffes ermöglicht, andererseits aber auch eine einfache Handhabung des Bohrkopfes erreicht werden soll.

Durch das DE-GM 19 13 317 ist es bereits bekannt, den Bohrkopf mittels einer Nut- und Feder-ausbildung mit der Bohrstange zu verbinden. Eine solche Gestaltung der Verbindung vermag jedoch die Anforderungen an die Bohreinrichtung im Hinblick auf die erforderliche Genauigkeit nur unzureichend zu erfüllen. Insbesondere wirkt sich hierbei nachteilig aus, daß zum einfachen Austausch der Bohrkronen zwischen deren Bohrung und der Bohrwelle ein Toleranzmaß vorgesehen werden muß, welches unvermeidlich zu Sollwertabweichungen beim Bohrvorgang führt.

Die DE 44 34 025 A1 zeigt eine demgegenüber veränderte Verbindung, bei der zur Fixierung des Bohrkopfes die Bohrstange mittels eines entsprechenden Gewindes aufgeschraubt wird. Dabei erfolgt die Ausrichtung des Bohrkopfes durch zwei zylindrische Paßflächen sowie einen Stirnanschlag. Auch hierbei ist zur einfachen Montierbarkeit ein Toleranzmaß vorzusehen, welches insbesondere im Hinblick auf den vergleichsweise aufwendigen Aufbau des Bohrkopfes und die erhöhten Anforderungen bei der Bearbeitung spröder Werkstoffe zu Ungenauigkeiten beim Bohrvorgang führen kann. Weiterhin erfordert die Schraubverbindung einen erheblichen Aufwand bei der Pflege und Wartung, um einem frühzeitigen Verschleiß, verursacht durch körnige Werkstoffpartikel, die zu Ablagerungen und dadurch zu Schäden an der Bohrkopfoberflä-che führen können, vorzubeugen.

Man könnte daran denken, eine bei der Metallbearbeitung bewährte Verbindung, beispielsweise ein Spannfutter, einzusetzen, um die erreichbare Präzision zu erhöhen. Dies scheitert jedoch bei der Bearbeitung von Werkstoffen, die nicht zu einer vergleichsweise problemlos entfernbaren Spanbildung neigen, an der Schädigung der Verbindung durch Ablagerungen oder eindringende Partikel, wodurch ein zuverlässiger Dauereinsatz ausgeschlossen ist.

Vor diesem Hintergrund liegt der Erfindung die Aufgabe zugrunde, zwischen dem Bohrkopf und der Bohrstange eine Verbindung vorzusehen, die einerseits eine hohe Genauigkeit bei der Bearbeitung des Werkstoffes ermöglicht und zugleich eine einfache Handhabung erlaubt. Dabei soll insbesondere ein frühzeitiger Verschleiß der Verbindung ausgeschlossen sein.

Diese Aufgabe wird gelöst mit einer Bohreinrichtung gemäß den Merkmalen des Patentanspruchs 1. Die Unteransprüche betreffen besonders zweckmäßige Weiterbildungen der Erfindung.

Erfindungsgemäß ist eine Bohreinrichtung vorgesehen, bei der die formschlüssige Verbindung zwischen dem Bohrkopf und der Bohrstange sowie die zuverlässige Übertragung des Bohrdrehmomentes zur Ausführung gelangt, wobei zur Positionierung des Bohrkopfes in der Bohrstange eine im wesentlichen kegelförmige und in eine entsprechende Aufnahme einsetzbare Ausformung vorgesehen ist. Hierdurch erfolgt die Positionierung und Ausrichtung des Bohrkopfes unabhängig von der Übertragung des Bohrdrehmomentes mittels der kegelförmigen Ausformung mit hoher Genauigkeit, während die Übertragung des Bohrdrehmomentes durch die formschlüssige Verbindung erfolgt. Bei der Fixierung des Bohrkopfes kann demnach auf ein Gewinde verzichtet werden, wobei auch vergleichsweise grobe Toleranzen bei der formschlüs-sigen Verbindung keine Auswirkung auf die Genauigkeit beim anschließenden Bohrvorgang haben, da die Positionierung des Bohrkopfes ausschließlich durch die kegelförmige Ausformung erfolgt. Die Handhabung ist daher erheblich vereinfacht, so daß der Aufwand zum Wechsel des Bohrkopfes und dadurch zugleich auch die Stillstandszeiten der Bohreinrichtung im Herstellungsprozeß wesentlich reduziert werden können. Zugleich wird der Pflege- und In-standhaltungsaufwand verringert, da die formschlüssige Verbindung derart ausgelegt werden kann, daß Einflüsse des Werkstoffabtrages auch im Dauereinsatz minimiert sind. Die gegebenenfalls erforderliche Reinigung der kegelförmigen Ausformung ist dabei durch den Wegfall beweglicher Bauelemente oder Hinterschneidungen mühelos durchführbar.

Die erfindungsgemäße Bohreinrichtung weist weiterhin zum Schutz gegen eine unerwünschte relative, axiale Beweglichkeit zwischen dem Bohrkopf und der Bohrstange eine Arretierung auf, die zugleich in ein Gewinde des Bohrkopfes und in ein Gewinde der Bohrstange eingreift, wobei die beiden Gewinde zueinander gegenläufige Steigungen aufweisen. Die Arretierung oder Fixierung verhindert dabei in erster Linie, daß der Vorsprung und die Ausnehmung außer Eingriff geraten, wodurch eine zuverlässige Übertragung des Bohrdrehmomentes nicht mehr gewährleistet werden kann. Die Arretierung dient daher der Sicherung der Verbindung zwischen Bohrkopf und Bohrstange, welches hierzu beispielsweise als Rastmittel oder Klemmkörper ausgeführt sein kann, um so das Lösen der Verbindung zu verhindern. Denkbar sind dabei auch Sperrkörper in Form eines Keiles oder eines die Verbindung durchdringenden Sicherungsstiftes. Durch die derart in die zueinander gegenläufige Gewinde eingreifende Arretierung wird in einfacher Weise eine Verspannung des Bohrkopfes gegenüber der Bohrstange ermöglicht, wobei auch eine gute Dichtungswirkung und damit ein verbesserter Schutz der durch die Arretierung eingeschlossenen Verbindung erreicht wird. Dabei wird die Arretierung zum Lösen der Verbindung einfach in entgegengesetzter Richtung gedreht, wodurch der Bohrkopf und die Bohrstange auseinandergedrückt werden. Daher wird eine Trennung auch dann vergleichsweise mühelos möglich, wenn die Verbindung gegen die Adhäsionskräfte anhaftender Partikel getrennt werden muß.

Dabei ist eine besonders vorteilhafte Ausgestaltung der erfindungsgemäßen Bohreinrichtung dann gegeben, wenn die formschlüssige Verbindung durch zumindest einen mit dem Bohrkopf verbundenen Vorsprung und eine den Vorsprung aufnehmende Ausnehmung der Bohrstange gebildet ist. Ein solcher beispielsweise als Nocken ausgeführter Vorsprung greift daher bei der Fixierung des Bohrkopfes in die Ausnehmung der Bohrstange formschlüssig ein und ermöglicht so die zuverlässige Übertragung des Bohrdrehmomentes. Dabei sind Toleranzmaße zwischen Vorsprung und Bohrung unschädlich, da sich die Kontaktflächen zwischen dem Bohrkopf und der Bohrstange selbsttätig bei der Betätigung des Bohrkopfes gegeneinander anlegen. Daher können auch Einführhilfen, beispielsweise in Form einer Anfasung, vorgesehen werden, die das Zusammenfügen der Verbindung weiter erleichtern.

Dabei ist eine einfache Ausführung der Verbindung dadurch gegeben, daß die formschlüssige Verbindung eine Klauenkupplung hat. Eine solche beispielsweise auch als Standardbauteil erhältliche Verbindung ermöglicht einen einfachen Aufbau und zugleich in der Praxis einen zuverlässigen Einsatz der Bohreinrichtung. Die Klauenkupplung weist hierzu beispielsweise zumindest zwei unbewegliche oder auch bewegliche Klauen auf, die in der Betriebsposition selbsttätig verrasten und so ein unerwünschtes axiales Lösen des Bohrkopfes von der Bohrstange, beispielsweise beim Zurückziehen des Bohrkopfes aus dem Bohrloch, verhindern.

Eine besonders gut geeignete Weiterbildung der Erfindung ist hingegen auch dann gegeben, wenn die Arretierung eine Hülse hat, die in ein Gewinde des Bohrkopfes oder in ein Gewinde der Bohrstange eingreift. Die Hülse ermöglicht hierdurch nach dem Verbinden des Bohrkopfes mit der Bohrstange deren kraftschlüssiges Verspannen gegeneinander, so daß ein ungewolltes Lösen ausgeschlossen ist. Zugleich umschließt die als Hohlmutter ausgeführte Hülse die Verbindung und ermöglicht so eine Abdichtung oder zumindest einen verbesserten Schutz gegen eindringende Partikel. Die Hülse ist hierbei wahlweise an dem Bohrkopf oder der Bohrstange frei drehbeweglich und in Richtung auf das jeweilige verbleibende Bauelement begrenzt axial verschiebbar angeordnet. Zur Fixierung wird die Hülse über die Verbindung geschoben und greift durch Drehbewegung in das entsprechende Gewinde ein, während das gegenüberliegende Ende der Hülse gegen einen Anschlag anliegt.

Die Arretierung könnte eine Querschnittsfläche mit einer mehrkantigen Außenfläche aufweisen, die den Einsatz eines handelsüblichen Werkzeuges zum Aufbringen der erforderlichen Drehbewegung ermöglicht. Eine besonders empfehlenswerte Ausgestaltung der Erfindung ist hingegen dann gegeben, wenn die Arretierung außenseitig zumindest eine über die gesamte axiale Erstreckung verlaufende Vertiefung aufweist. Diese Vertiefung ermöglicht so zugleich eine ungehinderte Strömung der Spülflüssigkeit entlang der als Kanal dienenden Vertiefung. Zugleich kann dabei ein in die Vertiefung eingreifendes Werkzeug zur Erzeugung der Drehbewegung angesetzt werden. Die Vertiefung kann dabei sowohl im wesentlichen parallel zur Bohrachse verlaufen als auch eine Neigung oder spiralige Anordnung aufweisen, durch die so zugleich der Durchfluß der Spülflüssigkeit unterstützt wird. Durch eine Vielzahl von Vertiefungen werden die vorteilhaften Wirkungen verstärkt.

Dabei wird eine besonders zweckmäßige Abwandlung der Erfindung dann erreicht, wenn die Arretierung gegenüber den äußeren radialen Abmessungen des Bohrkopfes zurückgesetzt angeordnet ist. Hierdurch wird einerseits die Strömung der Spülflüssigkeit lediglich unerheblich beeinflusst, andererseits wird ein Kontakt der Arretierung mit einer Wandfläche der Bohrung und eine damit verbundene mögliche Beschädigung der Arretierung oder der Wandfläche vermieden.

Derweiteren ist es besonders günstig, wenn die Arretierung ein Formelement aufweist, das eine am Umfang des Bohrkopfes sowie der Bohrstange angeordnete Vertiefung koaxial überdeckt, so daß ein Hohlraum gebildet wird, der durch Befüllen mit Sperrkörpern, insbesondere Kugeln, eine axiale Verschiebung zwischen dem Bohrkopf und der Bohrstange, verhindert. Hierdurch erfordert der Bohrkopf oder die Bohrstange lediglich eine als Rille ausgeführte Vertiefung, während die zur axialen Sicherung ausgestattete Fixierung oder Arretierung lediglich mit einer entsprechenden Führung für die Sperrkörper versehen ist. Die so geschaffene Arretierung ermöglicht auch die Nachrüstung bereits vorhandener Bohreinrichtungen.

Eine besonders einfache Weiterbildung der Erfindung wird auch dann erreicht, wenn die Arretierung eine Überwurfmutter ist. Diese kann beispielsweise an dem Bohrkopf frei drehbar und in axialer Richtung festgelegt angeordnet sein, so daß der Bohrkopf nach dem Schließen der Verbindung durch einfaches Aufschrauben der Überwurfmutter auf ein Gewinde der Bohrstange axial gesichert werden kann. Der Aufwand zur Herstellung und bei der Handhabung zum Austausch des Bohrkopfes läßt sich dadurch weiter reduzieren.

Eine andere besonders vorteilhafte Ausführungsform der Bohreinrichtung wird erreicht, wenn die Arretierung so ausgebildet ist, daß der Bohrkopf mit einem ersten Formelement versehen ist, welches im Betriebszustand zusammen mit einem zweiten Formelement der Bohrstange einen Hohlraum begrenzt, der durch Befüllen mit Sperrkörpern, insbesondere Kugeln, eine axiale Verschiebung zwischen dem Bohrkopf und der Bohrstange verhindert. Hierdurch wird eine einfache und zugleich mühelos handhabbare axiale Fixierung oder Arretierung des Bohrkopfes an der Bohrstange erreicht, wobei die Fixierung als integraler Bestandteil des Bohrkopfes und der Bohrstange ausgeführt ist, so daß ein zusätzliches Bauelement entfallen kann. Der Hohlraum wird hierbei durch eine verschließbare Öffnung mit Sperrkörpern vollgefüllt, so daß durch die beiden im wesentlichen einander überdeckend angeordneten Formelemente eine axiale Verschiebung des Bohrkopfes gegenüber der Bohrstange blockiert ist, während eine relative Drehbewegung des Bohrkopfes gegenüber der Bohrstange nicht ausgeschlossen werden soll. Die Übertragung des Bohrdrehmomentes erfolgt demnach ausschließlich durch die formschlüssige Verbindung. Ausführungsformen, bei denen durch das Einführen des Sperrkörpers zugleich eine axiale Verschiebung verhindert und die Übertragung des Bohrmomentes ermöglicht wird, sind ebenfalls darstellbar.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- **Figur 1**: eine Seitenansicht im Schnitt einer Bohreinrichtung, deren Bohrkopf noch nicht an einer Bohrstange fixiert ist,
- **Figur 2**: eine Seitenansicht im Schnitt der in Figur 1 gezeigten Bohreinrichtung im betriebsbereiten Zustand,
- **Figur 3**: einen Schnitt entlang der Linie A - B der in Figur 2 gezeigten Darstellung,
- **Figur 4**: eine Bohreinrichtung mit einer gegenüber den Figuren 1 und 2 geänderten Verbindung zwischen Bohrkopf und Bohrstange in einer geschnittenen Seitenansicht.

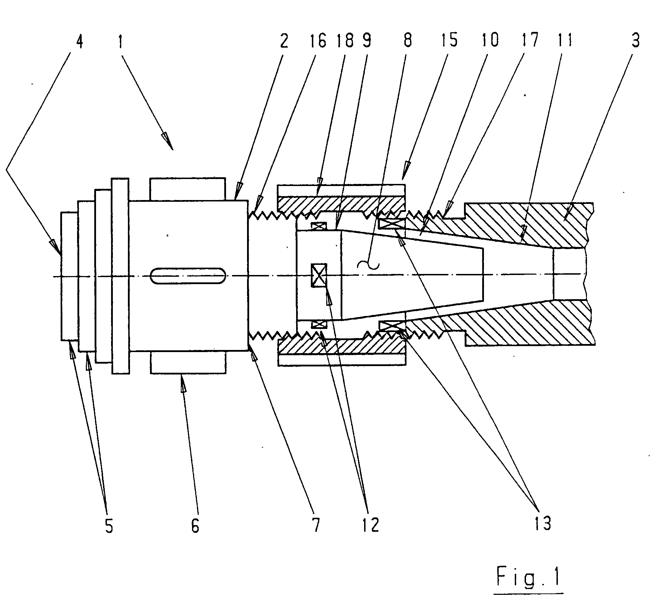

**Figur 1** zeigt eine seitliche Schnittdarstellung einer Bohreinrichtung 1 mit einem Bohrkopf 2 und einer Bohrstange 3 in einem noch nicht miteinander verbundenen Zustand. Der Bohrkopf 2 hat an seinem vorderen Ende 4 mehrere Bohrkronen 5 mit jeweils unterschiedlichem Durchmesser zur stufenweisen Erweiterung der Bohrung sowie mehrere Führungsleisten 6, die im Zusammenwirken mit einer nicht dargestellten Spülflüssigkeit durch Ausbildung eines Druckpolsters eine Abstützung an einer ebenfalls nicht dargestellten Innenwandung der Bohrung in einem Quarzglaszylinder ermöglichen. Der Bohrkopf 2 ist weiterhin an seinem der Bohrstange 3 zugewandten Ende 7 mit einem Fortsatz 8 ausgestattet, welcher einen zylindrischen Abschnitt 9 und eine kegelförmige Ausformung 10 hat. Diese kegelförmige Ausformung 10 ist in eine entsprechende Aufnahme 11 der Bohrstange 3 einsetzbar und ermöglicht dadurch eine Zentrierung des Bohrkopfes 2 in der Bohrstange 3. Zur Übertragung des Bohrdrehmomentes trägt der zylindrische Abschnitt 9 des Bohrkopfes 2 außenseitig mehrere als Nocken ausgeführte Vorsprünge 12. Diese Vorsprünge 12 tauchen in entsprechende Ausnehmungen 13 der Bohrstange 3 ein und gestalten so die Übertragung des Bohrdrehmomentes. Zum Schutz gegen axiale Verschiebung des Bohrkopfes 2 gegenüber der Bohrstange 3 hat die Bohreinrichtung 1 eine als Hohlmutter ausgeführte Arretierung 15, welche zugleich in ein erstes Gewinde 16 des Bohrkopfes 2 und in ein zweites Gewinde 17 der Bohrstange 3 eingreift. Die beiden Gewinde 16, 17 weisen hierbei zueinander gegenläufige Gewindegänge auf, so daß die Bohrstange 3 un der Bohrkopf 2 durch eine Drehbewegung der Arretierung 15 gegeneinander verspannt werden können. Desgleichen können der Bohrkopf 2 und die Bohrstange 3 zum Austausch des Bohrkopfes 2 durch eine Drehbewegung der Arretierung 15 in entgegengesetzter Richtung von einander getrennt werden, wobei die kegelförmige Ausformung 10 aus der Aufnahme 11 herausgezogen wird. Die Arretierung 15 trägt hierzu mehrere außenseitig als Nuten ausgeführte Vertiefungen 18, die einerseits den problemlosen Einsatz eines Werkzeuges zum Fest- oder Los-schrauben, andererseits eine Vergrößerung des Strömungsquerschnittes für die Spülflüssigkeit ermöglichen.

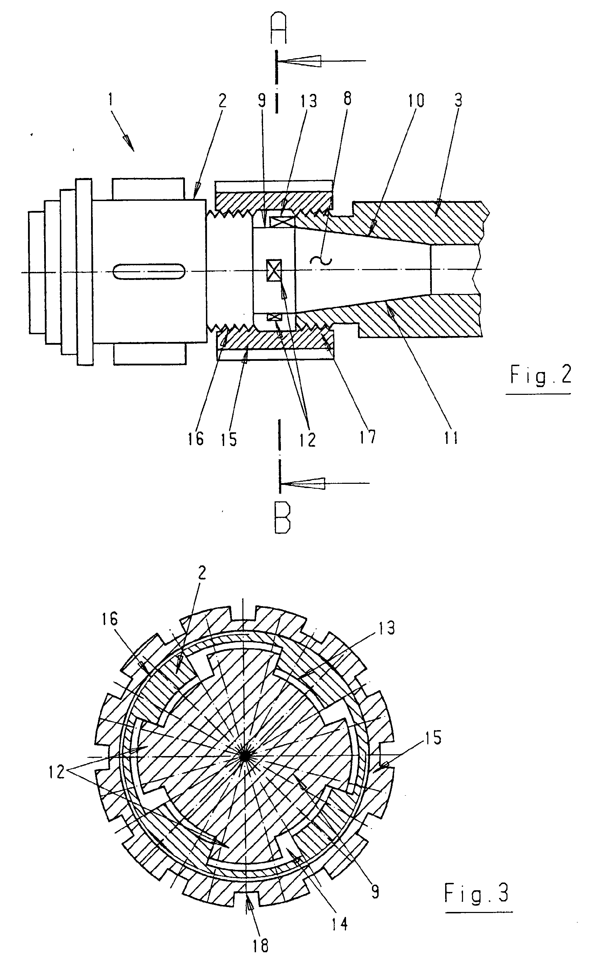

**Figur 2** zeigt eine Seitenansicht im Schnitt für den Betriebszustand der Bohreinrichtung 1, bei der die Bohrstange 3 und der Bohrkopf 2 miteinander verbunden sind. Hierbei tauchen die an dem zylindrischen Abschnitt 9 des Fortsatzes 8 angeordneten Vorsprünge 12 in die Ausnehmungen 13 der Bohrstange 3 ein und bilden so die formschlüssige Verbindung zur Übertragung des Bohrdrehmomentes. Dabei ist die zentrische Ausrichtung zwischen dem Bohrkopf 2 und der Bohrstange 3 durch die kegelförmige Ausformung 10 des Bohrkopfes 2 festgelegt, die spielfrei gegen die Aufnahme 11 der Bohrstange 3 anliegt. Um eine unerwünschte axiale Verschiebung des Bohrkopfes 2 zu verhindern ist in dem dargestellten Betriebszustand die als Hohlmutter ausgeführte Arretierung 15 auf die zueinander gegenläufigen Gewinde 16, 17 des Bohrkopfes 2 und der Bohrstange 3 aufgeschraubt, so daß diese gegeneinander verspannt sind. Zugleich ist dadurch die formschlüssige Verbindung gegen Einflüsse des Werkstoffabtrages sowie der Spülflüssigkeit geschützt, so daß der Verschleiß der Anordnung vergleichsweise gering ist.

**Figur 3** zeigt den Schnitt A - B aus Figur 2, wobei die formschlüssige Verbindung zwischen dem Bohrkopf 2 und der (nicht dargestellten) Bohrstange 3 deutlich wird. Zu erkennen ist dabei der Fortsatz 8 des Bohrkopfes 2 mit beispielweise vier am Umfang des zylindrischen Abschnittes 9 gleichmäßig verteilt angeordneten Vorsprüngen 12. Diese Vorsprünge 12 tauchen in entsprechend ausgeführte Ausnehmungen 13 der Bohrstange 3 formschlüssig ein und ermöglichen so an ihren Kontaktflächen eine zuverlässige Übertragung des erforderlichen Bohrdrehmomentes. Um ein Klemmen beim Eintauchen zu verhindern, ist ein Montagespalt 14 vorgesehen. Weiterhin ist die Arretierung 15 mit dem Gewinde 16 des Bohrkopfes 2 dargestellt. Die Außenfläche der Arretierung 15 ist mit einer Vielzahl von Vertiefungen 18 in Form von Nuten versehen.

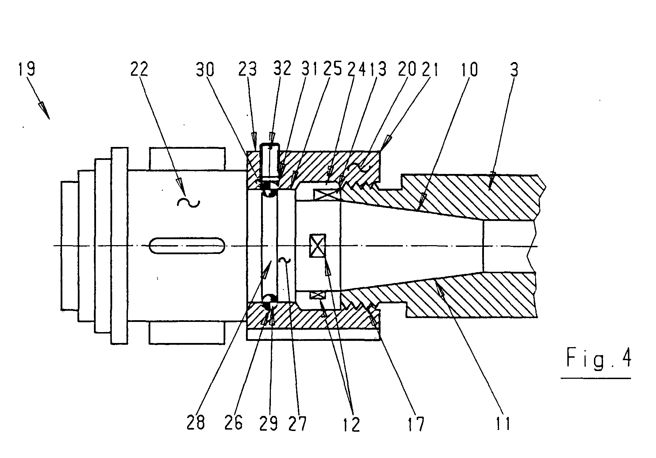

Eine demgegenüber abgewandelte Ausführung einer Bohreinrichtung 19 zeigt **Figur 4** in einer geschnittenen Seitenansicht. Diese unterscheidet sich von der in den Figuren 1 und 2 dargestellten Bohreinrichtung 1 im wesentlichen durch eine geänderte Arretierung 20. Hierbei greift die Arretierung 20 an ihrem der Bohrstange 3 zugewandten Endabschnitt 21 in das Gewinde 17 der Bohrstange 3 ein. An ihrem zum Bohrkopf 22 zeigenden Endabschnitt 23 hat die als Hohlkörper 24 ausgeführte Arretierung 20 ein an ihrer Innenwandung 25 angeordnetes Formelement 26. Dieses Formelement 26 ist in dem dargestellten Betriebszustand deckungsgleich mit einer Vertiefung 28 überlagert, die am Umfang eines zylindrischen Abschnittes 27 des Bohrkopfes 22 angeordnet ist. In einem derart durch die Vertiefung 28 und das Formelement 26 begrenzten ringförmigen und im Querschnitt kreisrunden Hohlraum 29 sind als Kugeln ausgeführte Sperrkörper 30 durch eine Öffnung 31 an der Arretierung 20 eingefüllt und durch eine Verschluß-schraube 32 verschlossen. Hierdurch ist eine relative axiale Verschiebung zwischen dem Bohrkopf 22 und der Bohrstange 3 ausgeschlossen. Zur Übertragung des Bohrdrehmomentes hat der Bohrkopf 22 mehrere Vorsprünge 12, die in die Ausnehmung 13 der Bohrstange 3 eintauchen, während die zentrische Ausrichtung zwischen dem Bohrkopf 22 und der Bohrstange 3 mittels der kegelförmigen Ausformung 10 des Bohrkopfes 22 spielfrei gegen die Aufnahme 11 der Bohrstange 3 erfolgt.

Durch die Trennung der funktionalen Einheiten zur Übertragung des Bohrdrehmomentes durch die formschlüssige Verbindung der Vorsprünge 12 zu den Ausnehmungen 13, sowie der exakten zentrischen Positionierung durch die kegelförmige Ausformung 10 und zur Sicherung gegen axiales Lösen durch die Arretierung bzw. Fixierung 20 wird eine die speziellen Anforderungen beim Bohren spröder Werkstoffe optimal erfüllende Ankopplung zwischen dem Bohrkopf 2, 22 und der Bohrstange 3 erreicht. Dabei wird erstmals die Möglichkeit eröffnet, Bohrungen mit hoher Genauigkeit vorzunehmen, ohne daß die Bohreinrichtung 1, 19 hierdurch zugleich einem erhöhten Verschleiß ausgesetzt ist, oder der Aufwand zur Herstellung und in der Handhabung eine unvertretbare Höhe annimmt.

### Bezugszeichenliste

- 1: Bohreinrichtung
- 2: Bohrkopf
- 3: Bohrstange
- 4: vorderes Ende
- 5: Bohrkrone
- 6: Führungsleiste
- 7: Ende
- 8: Fortsatz
- 9: zylindrischer Abschnitt
- 10: kegelförmige Ausformung
- 11: Aufnahme
- 12: Vorsprung
- 13: Ausnehmung
- 14: Montagespalt
- 15: Arretierung
- 16: Gewinde des Bohrkopfes
- 17: Gewinde der Bohrstange
- 18: Vertiefung
- 19: Bohreinrichtung
- 20: Arretierung
- 21: Endabschnitt
- 22: Bohrkopf
- 23: Endabschnitt
- 24: Hohlkörper
- 25: Innenwandung
- 26: Formelement
- 27: zylindrischer Abschnitt
- 28: Vertiefung
- 29: Hohlraum
- 30: Sperrkörper
- 31: Öffnung
- 32: Verschlußschraube

## Patentansprüche

1. Bohreinrichtung für spröde Werkstoffe, insbesondere für Quarzglas, mit einem an einer Bohrstange mittels einer formschlüssigen Verbindung lösbar fixierten Bohrkopf, **dadurch gekennzeichnet**, daß die formschlüssige Verbindung zwischen dem Bohrkopf (2; 22) und der Bohrstange (3) zur zuverlässigen Übertragung des Bohrdrehmomentes ausgeführt ist, während zur zentrischen Positionierung des Bohrkopfes (2; 22) an der Bohrstange (3) eine im wesentlichen kegelförmige und in eine entsprechende Aufnahme (11) einsetzbare Ausformung (10) vorgesehen ist und daß die Bohreinrichtung (1; 19) zum Schutz gegen eine unerwünschte relative, axiale Beweglichkeit zwischen dem Bohrkopf (2; 22) und der Bohrstange (3) eine Arretierung (15; 20) aufweist, die zugleich in ein Gewinde (16) des Bohrkopfes (2) und in ein Gewinde (17) der Bohrstange (3) eingreift, wobei die beiden Gewinde (16; 17) zueinander gegenläufige Steigungen aufweisen.

2. Bohreinrichtung nach Anspruch 1, **dadurch gekennzeichnet,** daß die formschlüssige Verbindung durch zumindest einen mit dem Bohrkopf (2, 22) verbundenen Vorsprung (12) und eine den Vorsprung (12) aufnehmende Ausnehmung (13) der Bohrstange (3) gebildet ist.

3. Bohreinrichtung nach den Ansprüchen 1 oder 2, **dadurch gekennzeichnet,** daß die formschlüssige Verbindung eine Klauenkupplung hat.

4. Bohreinrichtung nach einem der Ansprüche 1 bis 3, **dadurch gekennzeichnet,** daß die Arretierung (15; 20) eine Hülse hat, die in ein Gewinde (16) des Bohrkopfes (2; 22) oder in ein Gewinde (17) der Bohrstange (3) eingreift.

5. Bohreinrichtung nach einem der Ansprüche 1 bis 4, **dadurch gekennzeichnet,** daß die Arretierung (15; 20) außenseitig zumindest eine über die gesamte axiale Erstreckung verlaufende Vertiefung (18) aufweist.

6. Bohreinrichtung nach einem der Ansprüche 1 bis 5, **dadurch gekennzeichnet,** daß die Arretierung (15; 20) gegenüber den äußeren radialen Abmessungen des Bohrkopfes (2, 22) zurückgesetzt angeordnet ist.

7. Bohreinrichtung nach einem der Ansprüche 1 bis 6, **dadurch gekennzeichnet,** daß die Arretierung (20) ein Formelement (26) aufweist, das eine am Umfang des Bohrkopfes (22) angeordnete Vertiefung (28) koaxial überdeckt, so daß ein Hohlraum (29) gebildet wird, der durch Befüllen mit Sperrkörpern (30), insbesondere Kugeln, eine axiale Verschiebung zwischen dem Bohrkopf (22) und der Bohrstange (3), verhindert.

8. Bohreinrichtung nach einem der Ansprüche 1 bis 7, **dadurch gekennzeichnet,** daß die Arretierung (15; 20) eine Überwurfmutter ist.

9. Bohreinrichtung nach zumindest einem der vorangehenden Ansprüche, **dadurch gekennzeichnet,** daß die Bohreinrichtung (1; 19) eine Arretierung aufweist, bei der der Bohrkopf (22) mit einem ersten Formelement versehen ist, welches im Betriebszustand zusammen mit einem zweiten Formelement der Bohrstange (3) einen Hohlraum (29) begrenzt, der durch Befüllen mit Sperrkörpern (30), insbesondere Kugeln eine axiale Verschiebung des Bohrkopfes (22) gegenüber der Bohrstange (3) verhindert.
